# DEMANDE DE BREVET EUROPEEN

(11) **EP 1 174 669 A1**
(43) Date de publication de la demande: **23.01.2002**
(21) Numéro de dépôt: 00490030.4
(22) Date de dépôt: 19.07.2000
(51) Int. Cl.: F25D 31/00, A21D 6/00, A21D 8/02

(54) **Procédé et dispositif de refroidissement de l'eau alimentaire**

(71) Demandeur: Duflot Antoine Vache (Société Anonyme), 59960 Neuville en Ferrain (FR)
(72) Inventeur: Denis, Olivier, 59700 Marcq en Baroeul (FR)
(74) Mandataire: Lepage, Jean-Pierre

(57) **Abrégé**

L'invention est relative à un procédé et un dispositif de refroidissement de l'eau alimentaire, utilisable dans tout type d'industrie alimentaire où il est nécessaire de refroidir l'eau pour son utilisation.

Selon l'invention, le procédé est caractérisé par le fait que:
- on alimente l'eau alimentaire en continu et on la fait circuler sans stockage et sans contact avec l'air ambiant,
- on refroidit la température de l'eau alimentaire en au moins deux étapes d'une température initiale T₀ à une température de l'eau proche de 1°C,
afin d'obtenir une eau alimentaire pure et froide qui améliore la qualité des produits au moment de leur préparation.

Selon l'invention, le dispositif dispose :
- de moyens pour se connecter en entrée (12) sur le réseau (4) et en sortie (13) sur la machine (5),
- de moyens (2 et 3) pour alimenter l'eau en continu jusqu'à la machine (5) de préparation de la pâte et pour refroidir l'eau en deux étapes permettant d'obtenir une eau pure et à une température proche de 1°C au moment de son utilisation.

Application aux industries alimentaires telles que boulangeries ou biscuiteries pour la préparation des pâtes alimentaires.

## Description

La présente invention est relative à un procédé et dispositif de refroidissement de l'eau alimentaire, utilisable dans tout type d'industrie alimentaire où il est nécessaire de refroidir l'eau pour son utilisation, et tout particulièrement les boulangeries et biscuiteries pour la préparation en grande quantité de la pâte à pain ou à gâteaux.

La fabrication des produits alimentaires, en particulier dans les boulangeries et biscuiteries, nécessite l'utilisation d'une eau de qualité alimentaire. Cette eau alimentaire doit se présenter à une température optimale qui permet d'améliorer la qualité des produits.

En effet, il est essentiel, en particulier dans l'industrie boulangère, d'utiliser une eau alimentaire de qualité dont la température est proche de 0°C au moment de la préparation de la pâte alimentaire. En effet, si la pâte est préparée à une température trop élevée, elle ne lève pas dans des conditions optimales. Ceci augmente la durée de préparation du pain, d'où une perte de productivité et un pain de moins bonne qualité.

En effet, l'augmentation du temps de préparation peut atteindre plusieurs minutes à plusieurs heures étant donné les quantités importantes de pâte à préparer. Cette phase joue donc un rôle important dans la préparation de la pâte et dans la productivité.

De plus, lors du malaxage de la pâte comprenant notamment les ingrédients de base tels que farine, levure et eau, celle-ci se réchauffe. La pâte lève trop rapidement ce qui a pour conséquence de créer des trous dans le pain lors de la cuisson, d'où une moins bonne qualité des produits alimentaires livrés aux clients.

Il convient donc de refroidir la pâte lors de sa préparation en utilisant une eau plus froide.

Pour cela, il est connu dans le métier de la boulangerie d'utiliser de l'eau alimentaire sous forme de glace pour la préparation de la pâte. L'incorporation de glace dans la préparation de la pâte a pour inconvénient de réduire la qualité de la pâte. En effet, la glace a pour effet de casser la pâte, c'est-à-dire que celle-ci s'effrite en petits morceaux et n'a plus de cohésion.

La pâte est donc difficile à travailler et ne permet pas de préparer des produits alimentaires de bonne qualité.

L'insertion de la glace dans le pétrin a également pour inconvénient de casser le matériel. En effet, le malaxeur qui sert à mélanger la pâte alimentaire subit des chocs du fait de la présence de la glace dans le pétrin. Il est très possible par conséquent d'avoir à remplacer le malaxeur, ce qui entraîne une maintenance plus fréquente du dispositif de préparation de la pâte et donc des coûts supplémentaires.

Il est connu actuellement dans l'industrie alimentaire d'utiliser une eau dont la température est proche de 1°C. Cette eau est stockée dans des cuves réfrigérantes pour être ensuite mélangée aux ingrédients lors de la préparation de la pâte. On remplit donc des cuves réfrigérées avec de l'eau provenant du réseau, puis on stocke cette eau dans les cuves et on la refroidit jusqu'à ce qu'elle atteigne une température proche de 1°C pour être ensuite utilisée lors de la préparation de la pâte.

Ce procédé de refroidissement de l'eau a pour inconvénient de ne plus répondre aux normes d'hygiène alimentaire. En effet, l'eau se trouvant dans la cuve réfrigérée est en contact avec l'air ambiant et est stagnante durant toute la durée de son stockage et de son refroidissement, quelquefois pendant plusieurs jours, ce qui tend à laisser les bactéries se développer et donc à créer des moisissures dans la cuve et dans l'eau alimentaire qui est ensuite utilisée pour la préparation de la pâte.

Un autre inconvénient de ce procédé de refroidissement provient des risques de défaillance du système de refroidissement. En effet, le serpentin, dans lequel circule le fluide frigorifique servant à refroidir l'eau, est directement plongé dans la cuve et est donc en contact avec l'eau alimentaire. Ce fluide frigorifique circule dans le serpentin pour faciliter l'échange de température avec l'eau alimentaire et éviter la création de glace dans ledit serpentin. La circulation du fluide est réalisée au moyen d'un compresseur qui est lubrifié au moyen d'une huile frigorifique directement mélangée avec le fluide frigorifique. Cette huile frigorifique est de nature chimique pour des questions de normes et de respect de l'environnement. Le serpentin se dégrade avec le temps et présente des perforations ou des cassures de soudure, ce qui a pour inconvénient de mélanger l'huile frigorifique chimique avec l'eau alimentaire qui entre dans la préparation de la pâte.

Les produits préparés sont alors inconsommables et peuvent entraîner des intoxications alimentaires en cas de consommation.

Ce refroidissement a pour deuxième inconvénient de réduire la productivité des installations. En effet, lorsque l'eau a atteint sa température idéale d'utilisation, c'est-à-dire proche de 0°C, il convient alors d'utiliser toute la quantité d'eau stockée dans les cuves. Puis, lorsque la cuve est vide, il est nécessaire de remplir à noveau celle-ci en eau afin de la refroidir jusqu'à ce qu'elle atteigne à nouveau une température proche de 0°C.

Etant donné la contenance des cuves utilisées, quelquefois plusieurs centaines de litres, le temps de remplissage et surtout le temps de refroidissement de l'eau sont importants, et pendant toute la durée de remplissage et de refroidissement, il est impossible de produire de la pâte alimentaire du fait que l'eau stockée ne répond pas aux conditions de préparation de la pâte. Cette perte de temps entraîne donc une baisse du rendement de l'outil de travail.

De plus, l'eau alimentaire étant stagnante et refroidie, il apparaît des copeaux de glace qui, lorsqu'ils sont mélangés à la pâte alimentaire, ont pour effet de casser la pâte et donc de fournir des produits de mauvaise qualité.

Ce procédé de refroidissement de l'eau alimentaire ne répond donc plus aux normes alimentaires et tend à diminuer la qualité des produits et la productivité de l'installation industrielle.

Un autre inconvénient du procédé connu est son encombrement. En effet, la quantité des cuves réfrigérées pour le refroidissement de l'eau nécessite des dimensions très importantes pour permettre le stockage de plusieurs centaines de litres d'eau afin de permettre ensuite la préparation de la pâte alimentaire en grande série et étant donné que ce procédé nécessite un temps d'arrêt dans la production pour le refroidissement de l'eau.

La présente invention vise à remédier aux inconvénients des moyens existants et l'un de ses buts principaux est de fournir une eau alimentaire en continu dont la température est proche de 0°C lors de son utilisation pour la préparation de la pâte alimentaire, et qui répond aux normes d'hygiène alimentaire, afin d'obtenir des produits de meilleures qualités.

Pour cela, la présente invention a pour avantage de supprimer le stockage de l'eau dans des cuves réfrigérantes et de supprimer tout contact de l'eau avec le milieu ambiant, ce qui évite l'oxydation de l'eau et le développement de moisissures.

Un autre but de la présente invention est d'augmenter la productivité et le rendement des moyens de fabrication. Pour cela, la présente invention a pour avantage de supprimer le temps de remplissage et de stockage de l'eau pour la refroidir à une température proche de 0°C, et plus particulièrement aux environs de 1°C, en permettant une utilisation en continu de l'eau qui provient directement du réseau et sort du dispositif à sa température d'utilisation pour la préparation de la pâte.

Un autre avantage de la présente invention est de réduire l'encombrement du dispositif et de faciliter sa mise en oeuvre sur le site de production. En effet, la présente invention a pour avantage d'alimenter et de refroidir l'eau en continu provenant directement du réseau pour être utilisée, ce qui permet donc de limiter les dimensions du dispositif qui ne nécessite pas l'utilisation de grandes cuves de stockage de plusieurs centaines de litres.

D'autres buts et avantages de la présente invention apparaîtront au cours de la description suivante, qui n'a pas pour but de la limiter.

La présente invention est relative à un procédé de refroidissement de l'eau alimentaire utilisable dans l'industrie alimentaire telle que boulangerie et biscuiterie pour la préparation des pâtes quand il est nécessaire de refroidir l'eau à une température proche de 0°C, caractérisé par le fait que :
- on alimente l'eau alimentaire en continu et on la fait circuler sans stockage et sans contact avec l'air ambiant,
- on refroidit la température de l'eau alimentaire en au moins deux étapes d'une température initiale T₀ à une température d'utilisation proche de 1°C,
afin d'obtenir une eau alimentaire pure et froide qui améliore la qualité des produits au moment de leur préparation.

Elle fait également référence à un dispositif de refroidissement de l'eau alimentaire pour la mise en oeuvre du procédé de la présente invention, qui utilise l'eau du réseau et sert à alimenter les machines de préparation de la pâte, caractérisé par le fait que ledit dispositif dispose :
- de moyens pour se connecter en entrée sur le réseau et en sortie sur la machine,
- de moyens pour alimenter l'eau en continu jusqu'à la machine de préparation de la pâte et pour refroidir l'eau en deux étapes permettant d'obtenir une eau pure et à une température proche de 1°C au moment de son utilisation.

La description suivante permettra de mieux saisir l'objet de la présente invention qui s'appuie sur des figures, à savoir :
- la figure 1 qui présente le dispositif dans son ensemble,
- la figure 2 qui présente une conception détaillée du dispositif.

Le procédé de refroidissement de la présente invention s'applique en particulier à l'industrie alimentaire telle que la boulangerie notamment industrielle et les biscuiteries où il est nécessaire d'utiliser une eau alimentaire en continu à une température proche de 1°C pour optimiser la préparation de la pâte, telle que la pâte à pain, à tarte et à biscuit par exemple. Plus la température approche les 0°C et meilleures sont les conditions de préparation de la pâte.

Dans un mode préférentiel mais non limitatif, le procédé permettra d'atteindre une température d'utilisation de l'eau aux environs de 1°C, car plus on cherche à atteindre une température proche de 0°C et plus il est nécessaire d'utiliser une installation performante et de dimensions plus importantes. Pour éviter les coûts prohibitifs de l'installation, on limite à une température de 1°C environ, qui procure de très bonnes conditions de préparation de la pâte alimentaire.

La pâte est préparée dans un pétrin ou un malaxeur. Les ingrédients qui servent à la préparation de la pâte, tels que farine, levure, sel, graisse, oeufs et sucre, sont mélangés dans le pétrin auquel on ajoute de l'eau qui sert à faire prendre la pâte. La température de l'eau proche de 0°C étant la condition optimale à atteindre pour obtenir une pâte de bonne qualité, c'est-à-dire qui n'est pas levée à cause d'une eau trop chaude. La levée de la pâte pourra être effectuée dans de bonnes conditions car elle sera bien refroidie par l'eau alimentaire utilisée proche de 1°C.

De plus, l'utilisation d'une eau proche de 1°C, qui ne contient pas de copeaux de glace, évite que la pâte casse, s'effrite en morceaux et perd sa cohésion

Ainsi, la levée pourra être mieux contrôlée par le boulanger sans souci de casser la pâte alimentaire.

Cette eau alimentaire doit de plus répondre aux normes d'hygiène de l'industrie boulangère, c'est-à-dire qu'elle doit être saine, non oxydée, et ne pas engendrer de prolifération de microbes. Pour cela il est nécessaire de supprimer tout contact de l'eau avec le milieu ambiant et son stockage pendant la période de refroidissement de la température initiale à la température d'utilisation.

Pour atteindre ces résultats de l'eau alimentaire, on procède de la manière suivante :
- on alimente l'eau alimentaire en continu et on la fait circuler sans stockage ni contact avec le milieu ambiant,
- on refroidit la température de l'eau alimentaire en au moins deux étapes pour atteindre une eau dont la température est au voisinage de 1°C.

Ainsi, on obtient une eau alimentaire de bonne qualité qui n'est pas oxydée et ne contient pas de copeaux de glace.

Il est nécessaire de refroidir l'eau en au moins deux étapes car il n'est pas concevable de le faire en une seule étape. En effet, les moyens utilisés pour la mise en oeuvre du procédé, qui seront développés dans la description ci-dessous, ne permettent pas de réaliser le refroidissement en une seule étape, car les moyens devraient alors être très performants, c'est-à-dire avoir des dimensions et des capacités de refroidissement très importantes qui permettraient de réduire la température de l'eau qui circule en continu de l'ordre de 20°C pour atteindre les conditions optimales d'utilisation.

Ceci nécessiterait l'utilisation d'une technologie plus performante, augmenterait la taille des installations et donc leur coût.

Pour obtenir une température d'utilisation de l'eau qui se situe au voisinage de 1°C, on a dû refroidir l'eau en au moins deux étapes, à savoir :
- pour la première étape, on réduit la température de l'eau depuis la température initiale T₀ jusqu'à une température intermédiaire T₁, cette différence de température obtenue étant de l'ordre de 15°C,
- puis on effectue la deuxième étape du refroidissement et pour cela on réduit la température de l'eau de la température intermédiaire T₁ jusqu'à la température d'utilisation T₂, la différence de température obtenue étant de l'ordre de 4 à 5°C, ce qui permet d'obtenir la température d'utilisation proche de 1°C.

De manière générale, la température initiale T₀ de l'eau est la température ambiante qui se situe à environ 20°C.

La réalisation des deux étapes de refroidissement s'effectue de manière continue en récupérant l'eau directement à partir du réseau au moment de son utilisation où elle se situe à la température initiale pour être utilisée ensuite dans le pétrin ou malaxeur où elle est ajoutée et mélangée aux ingrédients intervenant dans la préparation de la pâte alimentaire.

L'eau sort donc du réseau, passe par une première étape de refroidissement de la température initiale à la température intermédiaire, puis passe par la seconde étape de refroidissement où elle passe de la température intermédiaire à la température d'utilisation pour finir en sortie dans le pétrin ou la machine de malaxage de la pâte. Le circuit de l'eau depuis le réseau jusqu'à la machine s'effectuant de façon continue sans interruption ni contact avec le milieu ambiant, ce qui évite toute oxydation de l'eau.

Les deux étapes de refroidissement sont réalisées au moyen d'échangeur de température; on fait donc circuler l'eau en sortie du réseau à travers un premier échangeur qui permet d'atteindre la température intermédiaire puis à travers un second échangeur qui permet d'atteindre la température d'utilisation. Dans un mode préférentiel mais non limitatif, on choisit les échangeurs de façon à obtenir une température intermédiaire de l'ordre de 5°C, c'est-à-dire que le premier échangeur permet d'obtenir une diminution de température environ de 15°C puis le second échangeur permet d'obtenir la température d'utilisation proche de 1°C, c'est-à-dire permettant de réduire la température de l'ordre de 4 à 5°C.

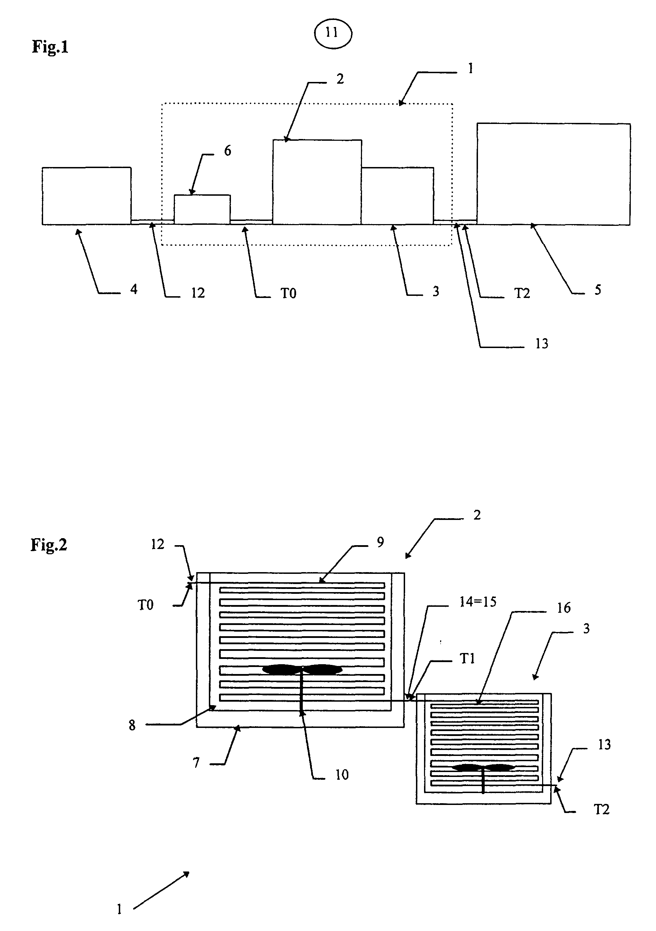

La figure 1 présente une vue d'ensemble du dispositif (1) pour la mise en oeuvre du procédé de la présente invention. Le dispositif (1) est mis en place sur le site de production (11) et il est relié à son entrée (12) au réseau (4) et en sortie (13) à la machine de préparation (5) de la pâte qui est du type pétrin ou malaxeur.

La figure 2 présente la conception du dispositif (1) de la présente invention. Le dispositif dispose de moyens pour se connecter sur le réseau en entrée (12) et se connecter sur la machine de préparation (5) en sortie (13).

Ces moyens, non référencés sur les figures, sont du type standard comme par exemple des tuyaux flexibles ou durs, qui permettent de faire circuler l'eau du réseau (4) à la machine (5) et de connecter les éléments (2 et 3) du dispositif au réseau (4) et à la machine (5), et par exemple des moyens de fixation étanche sur le réseau (4) et la machine (5).

Dans un mode préférentiel mais non limitatif, ces moyens sont dimensionnés de façon à obtenir un débit régulier dans le dispositif (1) et une bonne alimentation en eau de la machine (5) de préparation de la pâte.

La machine dispose également de moyens (2 et 3) pour alimenter l'eau en continu, depuis le réseau (4) jusqu'à la machine (5) et pour la refroidir en deux étapes permettant d'obtenir une eau pure et à une température proche de 1°C au moment de son utilisation.

Ces moyens se composent d'au moins deux échangeurs (2 et 3) qui sont montés en cascade. Le premier échangeur (2) permet de refroidir l'eau de la température initiale T₀, c'est-à-dire celle provenant du réseau, à une température intermédiaire T₁.

Le second échangeur (3), monté en cascade directement en sortie du premier échangeur (2), permet de refroidir l'eau de la température intermédiaire T₁, c'est-à-dire celle en sortie (14) du premier échangeur (2), à une température d'utilisation T₂.

La conception des deux échangeurs est telle que présentée à la figure 2. Les échangeurs se composent d'une cuve, d'un groupe frigorifique qui crée une épaisseur de glace d'environ 10 centimètres sur l'évaporateur dans la cuve remplie d'un fluide échangeur, cuve dans laquelle baigne un serpentin (9) qui sert à véhiculer l'eau alimentaire. Le fluide échangeur se trouve à une température de l'ordre de 1°C.

Ainsi, lorsque l'eau circule dans le serpentin, il se produit un échange de température entre le fluide échangeur et l'eau alimentaire, l'échange de température permettant de diminuer la température de l'eau du réseau tout au long de son parcours dans le serpentin (9) jusqu'à la sortie de l'échangeur.

Pour faciliter l'échange de température entre l'eau du réseau circulant dans le serpentin et le fluide échangeur à la température de 1°C, le fluide échangeur est agité au moyen d'un agitateur qui sert à évacuer plus rapidement la chaleur et à optimiser le refroidissement de l'eau du réseau. Ainsi, en partant d'une eau du réseau à la température initiale T₀ à l'entrée du serpentin (9) du premier échangeur (2), on arrive à atteindre une réduction de l'ordre de 15°C en sortie (14) du serpentin du premier échangeur (2), ce qui permet donc d'obtenir une température intermédiaire à environ 5°C.

De même, en partant d'une eau en sortie du premier serpentin (9) à une température intermédiaire T₁ de l'ordre de 5°C, la sortie (14) du premier échangeur (2) étant reliée directement à l'entrée (15) du serpentin (16) du second échangeur (3), il est possible d'atteindre une réduction de température de l'ordre de 4 à 5°C et donc d'atteindre en sortie du serpentin (16)du second échangeur (3) une température d'utilisation de l'eau alimentaire de 1°C environ.

Le dispositif de refroidissement de l'eau alimentaire est connecté directement sur le réseau d'eau (4). Ainsi, l'eau sort du réseau (4) et circule dans les serpentins (9 et 16) des échangeurs du dispositif, montés en cascade, où elle est refroidie et prête à être utilisée dans la préparation de la pâte. De cette façon, l'eau n'est ni stockée dans des cuves, ni en contact avec le milieu ambiant depuis son départ à la sortie du réseau jusqu'à son utilisation dans le malaxeur ou le pétrin lors de la préparation de la pâte. On évite ainsi toute prolifération de microbes dans l'eau, ce qui améliore la qualité de l'eau alimentaire et la préparation de la pâte dans le respect des normes d'hygiène alimentaire.

Dans un mode préférentiel mais non limitatif, le dispositif de refroidissement dispose en amont du premier échangeur d'un purificateur d'eau qui permet d'améliorer la qualité de l'eau du réseau. L'eau en sortie du réseau est donc filtrée par un purificateur (6) puis circule dans les échangeurs (2 et 3) montés en cascade où elle est refroidie jusqu'à la température d'utilisation.

Le premier échangeur (2) permet de réduire la température de l'eau de l'ordre de 15°C, et le second échangeur (3) de l'ordre de 5°C. Il convient donc de choisir convenablement les dimensions des échangeurs qui permettent d'atteindre ces diminutions de température, à savoir une diminution de 15°C pour passer de la température initiale à la température intermédiaire et une diminution de l'ordre de 5°C pour passer de la température intermédiaire à la température d'utilisation.

En effet, l'échange de température s'effectue assez facilement et rapidement avec le premier échangeur (2) du fait de la différence importante de température entre l'eau du réseau se trouvant initialement à une température ambiante de l'ordre de 20°C et le flux échangeur se trouvant à la température de + 2°C. Pour cela, l'échangeur doit être dimensionné de façon à ce que, lorsque l'eau circule depuis l'entrée du serpentin (9) jusqu'à la sortie du serpentin, celle-ci ait subi une réduction de température de l'ordre de 15°C.

Pour le second échangeur (3), la différence de température est faible, entre l'eau du réseau se trouvant à la température de 5°C à l'entrée du serpentin (16) et le fluide se trouvant à une température de + 2°C. Pour cela, l'échange de température s'effectue beaucoup plus lentement dans le temps et il est difficile, lorsque l'eau du réseau a atteint une température proche de 1°C de continuer à diminuer la température. Il n'est donc pas nécessaire de surdimensionner le second échangeur.

Pour cela, on choisit dans un mode préférentiel mais non limitatif de prendre un premier échangeur de capacité supérieure au second échangeur. Par exemple, on choisit pour le premier échangeur une capacité de 140 litres d'eau et pour le second échangeur une capacité de 55 litres.

La présente invention permet donc de fournir une eau alimentaire de qualité optimale pour la préparation de la pâte, l'alimentation en eau alimentaire se faisant de façon continue directement en sortie du réseau, sans stockage de l'eau, ce qui a pour intérêt d'améliorer la productivité.

## Revendications

1. Procédé de refroidissement de l'eau alimentaire utilisable dans l'industrie alimentaire telle que boulangerie et biscuiterie pour la préparation des pâtes où il est nécessaire de refroidir l'eau à une température proche de 0°C, **caractérisé par le fait que** :
- on alimente l'eau alimentaire en continu et on la fait circuler sans stockage et sans contact avec l'air ambiant,
- on refroidit la température de l'eau alimentaire en au moins deux étapes d'une température initiale T₀ à une température de l'eau proche de 1°C,
afin d'obtenir une eau alimentaire pure et froide qui améliore la qualité des produits au moment de leur préparation.

2. Procédé de refroidissement de l'eau alimentaire, selon la revendication 1, **caractérisé par le fait que** :
- on réduit la température de l'eau alimentaire de la température initiale T₀ à une température intermédiaire T₁ de quelques degrés Celsius,
- on réduit ensuite la température de l'eau alimentaire de la température intermédiaire T₁ à une température d'utilisation T₂ proche de 1°C.

3. Procédé de refroidissement de l'eau alimentaire, selon les revendications 1 et 2, **caractérisé par le fait que** :
- on fait circuler en continu l'eau alimentaire à travers un premier échangeur afin de passer de la température initiale T₀ de l'eau à la température intermédiaire T₁ de l'eau de quelques degrés Celsius,
- on fait ensuite circuler l'eau à travers un deuxième échangeur afin de passer de la température intermédiaire T₁ de quelques degrés Celsius à la température d'utilisation T₂ proche de 1°C.

4. Procédé de refroidissement de l'eau alimentaire, selon la revendication 1, **caractérisé par le fait qu'**on alimente l'eau en la récupérant du réseau au moment de son utilisation.

5. Dispositif (1) de refroidissement de l'eau alimentaire pour la mise en oeuvre du procédé de la présente invention, qui utilise l'eau du réseau (4) et sert à alimenter les machines (5) de préparation de la pâte, **caractérisé par le fait que** ledit dispositif dispose :
- de moyens pour se connecter en entrée (12) sur le réseau (4) et en sortie (13) sur la machine (5),
- de moyens (2 et 3) pour alimenter l'eau en continu jusqu'à la machine (5) de préparation de la pâte et pour refroidir l'eau en deux étapes permettant d'obtenir une eau pure et à une température proche de 1°C au moment de son utilisation.

6. Dispositif (1) de refroidissement de l'eau alimentaire, selon la revendication 5, **caractérisé par le fait que** les moyens (2 et 3) se composent d'au moins deux échangeurs (2 et 3) de température montés en cascade, le premier échangeur (2) permettant de passer d'une température initiale T₀ de l'eau alimentaire à une température intermédiaire T₁ et le second (3) de la température intermédiaire T₁ à la température d'utilisation T₂ proche de 1°C.

7. Dispositif (1) de refroidissement de l'eau alimentaire, selon les revendications 5 et 6, **caractérisé par le fait qu'**il se connecte directement au réseau (4) pour éviter tout stockage et contact avec l'air de l'eau alimentaire avant son utilisation.

8. Dispositif (1) de refroidissement de l'eau alimentaire, selon les revendications 5, 6 et 7, **caractérisé par le fait qu'**il dispose en amont d'un purificateur (6) positionné entre le réseau (4) et l'entrée (12) du premier échangeur pour augmenter la qualité de l'eau alimentaire.

9. Dispositif (1) de refroidissement de l'eau alimentaire, selon les revendications 5 et 6, **caractérisé par le fait que** le premier échangeur (2) dispose d'une capacité supérieure au second échangeur (3).
